Europäisches Patentamt

European Patent Office

Office européen des brevets

(19)

(11) **EP 1 121 612 B1**

(12) **EUROPÄISCHE PATENTSCHRIFT**

(45) Veröffentlichungstag und Bekanntmachung des Hinweises auf die Patenterteilung:
**21.05.2003 Patentblatt 2003/21**

(21) Anmeldenummer: **99941520.1**

(22) Anmeldetag: **05.08.1999**

(51) Int Cl.⁷: **G02B 6/14**, G02B 6/16, H04B 10/18

(86) Internationale Anmeldenummer:
**PCT/EP99/05664**

(87) Internationale Veröffentlichungsnummer:
**WO 00/014579 (16.03.2000 Gazette 2000/11)**

(54) **OPTISCHE VERBINDUNGSSTRECKE**

OPTICAL JUNCTION SECTION

SECTION OPTIQUE DE JONCTION

(84) Benannte Vertragsstaaten:
**AT BE CH CY DE DK ES FI FR GB GR IE IT LI LU MC NL PT SE**

(30) Priorität: **09.09.1998 DE 19841068**

(43) Veröffentlichungstag der Anmeldung:
**08.08.2001 Patentblatt 2001/32**

(73) Patentinhaber: **Deutsche Telekom AG**
**53113 Bonn (DE)**

(72) Erfinder:
 • **DULTZ, Wolfgang**
  **D-65936 Frankfurt/M. (DE)**
 • **DULTZ, Gisela**
  **D-65936 Frankfurt/M. (DE)**
 • **FRINS, Erna**
  **11600 Montevideo (UY)**
 • **SCHMITZER, Heidrun**
  **D-93051 Regensburg (DE)**

(56) Entgegenhaltungen:
EP-A- 0 582 405    EP-A- 0 646 819
US-A- 5 408 545    US-A- 5 613 028
US-A- 5 701 376

 • **PATENT ABSTRACTS OF JAPAN vol. 1996, no. 06, 28. Juni 1996 (1996-06-28) & JP 08 050208 A (FURUKAWA ELECTRIC CO LTD:THE), 20. Februar 1996 (1996-02-20)**
 • **HALDANE F.D.M.: "Path dependence of the geometric rotation of polarization in optical fibers" OPTICS LETTERS., Bd. 11, Nr. 11, November 1986 (1986-11), Seiten 730-732, XP002125466 OPTICAL SOCIETY OF AMERICA, WASHINGTON., US ISSN: 0146-9592**
 • **PETROV N.I.: "Evolution of polarization in an inhomogeneous isotropic medium" JOURNAL OF EXPERIMENTAL AND THEORETICAL PHYSICS, Bd. 85, Nr. 6, Dezember 1997 (1997-12), Seiten 1085-1093, XP000861541 USA**

**Beschreibung**

Technisches Gebiet:

Die Erfindung betrifft eine bewegliche optische Verbindungsstrecke mit wenigstens einer Lichtleitfaser, insbesondere zur Nachrichtenübertragung oder zur interferometrischen Messung.

Stand der Technik:

Optische Glasfaserstrecken zur Übertragung von Informationen mit Licht sind sowohl für lange Strecken in der Telekommunikation als auch für kurze Strecken innerhalb von Gebäuden und Fahrzeugen und Maschinen, aber auch in elektronischen Rechenmaschinen von großem Vorteil, da sie eine hohe Datenübertragungsdichte bei geringen Leistungsverlusten gewährleisten. Besonders bei der Verbindung von optischen Sensoren zur Messung physikalischer Parameter wie Druck, Temperatur usw. sind Glasfaserzuleitungen und Glasfaserableitungen günstig, da sie dünn und flexibel sind, dabei aber mechanisch sehr dauerhaft. Des weiteren können sie im Gegensatz zu elektrisch leitenden Verbindungen keine elektrischen Überschläge und Kurzschlüsse verursachen. Die hohe Übertragungskapazität der Glasfaser erlaubt es, Sensoren und Meßeinrichtungen zu ändern oder aufzurüsten, ohne die Verbindungsstrecken auszuwechseln, was in Fahrzeugen, Gebäuden, Maschinen oder Produktionseinrichtungen erhebliche Einsparungen ergeben kann. Oft müssen die Glasfaserverbindungen mechanisch bewegt werden, z. B. in Robotern, aber auch in Gebäuden und Fahrzeugen sind dehnungsbedingte Bewegungen zwischen verschiedenen Bauteilen häufig.

Glasfaserstrecken zur Informationsübertragung sind daher immer dann besonders vorteilhaft, wenn hohe Informationsdichten übertragen werden sollen und die Verbindung mechanisch flexibel sein muß, da Sender und Empfänger der Information einen zeitabhängig variablen örtlichen Abstand voneinander haben.

Hierbei tritt das Problem auf, daß bei großen Positions- und insbesondere Abstandsänderungen von Sender und/oder Empfänger in Form einfacher Kabel vorliegende optische Verbindungsstrecke die Gesamtanordnung, z.B. ein Roboter mit Fernsteuerung, durch die notwendige Längenreserve des Kabels behindert werden kann. So können einzelne Teile, welche über eine optische Verbindungsstrecke miteinander kommunizieren, durch Kabelschlaufen mechanisch blockiert werden. Weiterhin kann es zu "Kabelsalat" kommen.

Ein weiteres Problem bei Positions- und Abstandsänderungen von Sender und/oder Empfänger ist durch die Natur des optischen Übertragungssignals begründet:

Bei Nachrichtenübertragungen hoher Qualität und Übertragungsfrequenz muß der Polarisationszustand des optischen Nachrichtenflusses in der Lichtleitfaser sowie in den übrigen optischen Komponenten kontrolliert werden. Im Fall kohärenter Übertragungen müssen z. B. interferenzfähige Mischungen des optischen Nachrichtenflusses mit anderen Lichtquellen erfolgen, die nur dann optimal sind, wenn die Polarisationszustände annähernd gleich sind. Bei hochbitratigen Übertragungen limitiert die Polarisationsmodendispersion der Faser die Empfangsqualität, und nur durch eine sorgfältige Kontrolle der Polarisation kann die Übertragungsfrequenz erhöht werden. Auch in vielen anderen optischen Bauteilen hängt die Leistung von der Polarisation des Lichtes ab.

Der Polarisationszustand des Lichtes in einer Glasfaser ist im allgemeinen nicht konstant. Jede Glasfaser hat eine gewisse elliptische Doppelbrechung, so daß sich die Polarisation des Lichtes in der Faser kontinuierlich ändert. Diese Änderung pflanzt sich bis zum Ende der Faser fort, und da sie von der Geometrie der Faserkurve im Raum abhängt, ändert sich der Polarisationszustand am Ausgang einer bewegten Faser mit der Bewegung.

Dieser Polarisationseffekt wird bisher dadurch vermindert, daß die optische Nachrichtenübertragung in einer der Eigenmoden einer polarisationserhaltenden Faser erfolgt. Diese polarisationserhaltenden Fasern sind sehr stark doppelbrechend, so daß eine Überkopplung zwischen den beiden Polarisationsmoden in der Faser praktisch nicht erfolgt. Da es sich bei der Polarisationsänderung des Lichtes in einer Glasfaser um einen Effekt der Phasenverschiebung zwischen den Elgenmoden des Lichtes handelt, tritt die Polarisationmodendispersion nicht auf, wenn sich das Licht in der Faser permanent nur in einer Eigenmode fortpflanzt.

Der Nachteil dieser Methode ist der, daß die polarisationserhaltenden Fasern. teuer sind. Außerdem muß die Einkopplung des Lichtes am. Eingang der polarisationserhaltenden Faser in einem definierten Polarisationszustand erfolgen.

Technische Aufgabe:

Der Erfindung liegt daher die Aufgabe zugrunde, eine optische Verbindungsstrecke zur Verfügung zu stellen, bei welcher die geschilderten Probleme nicht auftreten. Insbesondere soll zur Gewährleistung einer hohen Übertragungsqualität der Polarisationszustand des Lichts nicht wesentlich von Formänderungen der Verbindungsstrecke und damit von Positionsänderungen von Sender und Empfänger abhängen. Des weiteren soll die Verbindungsstrecke an Formänderungen, insbesondere Längenänderungen leicht aupaßbar, dabei aber stets übersichtlich sein.

Offenbarung der Erfindung:

Die Aufgabe wird gelöst durch eine optische Verbindungsstrecke mit wenigstens einer Lichtleitfaser, insbesondere zur Nachrichtenübertragung, dadurch gekennzeichnet, daß die Lichtleitfaser mehrfach gebogen und dabei schraubenförmig abwechselnd als Rechts- und Linksschraube gewunden ist, wobei Faserstücke mit Rechts- und Linkskrümmung derart über die Verbindungsstrecke verteilt angeordnet sind, daß die über die Verbindungsstrecke gemittelte Torsion der Faser etwa Null ist.

Die erfindungsgemäße optische Verbindungsstrecke ist somit derart gestaltet, daß die Empfindlichkeit des Polarisationszustands des optischen Übertragungssignals gegenüber Formänderungen der Verbindungsstrecke bzw. der Lichtleitfaser weitgehend kompensiert ist. Dieses ist erfindungsgemäß dadurch gewährleistet, daß die Lichtleitfaser mehrfach gebogen ist, wobei Faserstücke mit Links- und Rechtskrümmung derart über die Verbindungsstrecke verteilt angeordnet sind, daß die über die Verbindungsstrecke gemittelte Torsion der Faser etwa Null ist. Vorzugsweise gilt dieses auch für einzelne Unterabschnitte der Faser, so daß Links- und Rechtskrümmungen gleichmäßig über die Faser verteilt sind. Vorzugsweise ist die Faser schraubenförmig abwechselnd als Rechts- und Linksschraube gewunden. Es sind auch Mischformen mit einem ebenen Mäander möglich.

Grundlage dieser Erfindung ist die bewegungs- und formabhängige Doppelbrechung einer optischen Faser: Die lineare Doppelbrechung hängt stark von der Elliptizität des Faserkerns, weniger stark von der Biegung der Faser und kaum von der Schraubenwindung mit großem Radius der Faser ab. Demgegenüber hängt die zirkulare Doppelbrechung kaum von der Elliptizität des Faserkerns und von der Biegung der Faser ab, dagegen sehr stark von der Schraubenwindung der Faser. Die Hauptursache für die Formabhängigkeit des Polarisationszustandes am Ausgang einer Glasfaser ist die starke Abhängigkeit der optischen Aktivität der Faser von der genauen Form ihrer Schraubenwindungen. Dieser Effekt ist in erster Näherung achromatisch und verursacht keine Polarisationsmodendispersion. Er wird durch eine der sogenannten optischen Berry-Phasen, die "Spinredirektionsphase" verursacht (R.Y. Chiao, Y.S. Wu, Phys. Rev. Lett. 57, 933 (1986)). Es handelt sich bei dieser Berry-Phase (oder geometrischen Phase) um einen Phaseneffekt, der durch die Struktur der Raumkurve der Faser verursacht wird und nicht durch einen optischen Weg wie bei der normalen dynamischen Phase des Lichtes. Dennoch haben geometrische Phasen bezüglich der Interferenz des Lichtes dieselben Eigenschaften wie die normale dynamische Phase.

Die Größe der Spinredirektionsphase in einer schraubenförmig gewundenen Faser ist gleich dem Raumwinkel $\Omega$, den der k-Vektor (k entspricht der Ausbreitungskonstanten $\beta$ in der technischen Literatur) auf der Kugel der Orientierungen der Lichtausbreitung im Gegenuhrzeigersinn umläuft, wenn das Licht in der Faser durch eine Schraubenwindung geführt wird. Die Spinredirektionsphase ist additiv und ändert ihr Vorzeichen, wenn sich der Schraubensinn der Faser ändert, z. B. von der links- zur Rechtsschraube.

Zur Reduktion dieses formbedingten Polarisationseffekts muß die Faser aus gewundenen Faserstücken mit wechselndem Windungssinn bestehen.

Beispielsweise sind die Faserstücke abwechselnd rechts und links gewunden, wobei der Raumwinkel, die der k-Vektor in den linksgewundenen Stücken umläuft, gleich dem Raumwinkel ist, den der k-Vektor in den rechtsgewundenen Stücken umläuft. Im einfachsten Fall folgt die Faser abwechselnd gleichlang und gleichgewunden einer Rechts- und dann einer Linksschraube, oder rechts- und linksgewundene Faserstücke einer festen Länge lösen sich abwechselnd ab.

Zur Reduktion der Polarisationsabhängigkeit von Formänderungen der Faserstrecke müssen die Abschnitte mit Rechts- und Linksschraubenwindung der Faser so auf der Fasor verteilt werden, daß sich bei der Formänderung der Faser die Änderungen $d\Omega_i$ der Raumwinkel $\Omega_i$ der k-Vektoren im i-ten Faserstück zu Null addieren, also $\Sigma\, d\Omega_i = 0$.

Die Polarisationsvariation eines optischen Signals am Ausgang einer bewegten optischen Verbindungsstrecke mit einer Lichtleitfaser wird vorteilhaft reduziert, indem die Lichtleitfaser mehrfach gebogen wird, wobei Faserstücke mit Rechts- und Linkskrümmung derart über die Verbindungsstrecke verteilt werden, daß die über die Verbindungsstrecke gemittelte Torsion der Faser etwa Null ist.

Um die Polarisationsvariation auch bei Formänderungen nur eines Faserteils zur reduzieren, wird die Lichtleitfaser vorzugsweise derart gebogen, daß die über Unterabschnitte der Verbindungsstrecke gemittelte Torsion des Unterabschnitts etwa Null ist. Ein Unterabschnitt ist dabei ein Faserabschnitt, der wenigstens so lang ist, daß er rechts- und linksgewundene Faserstücke enthält, deren Torsion sich jeweils ausgleicht, z.B. zwei aufeinanderfolgende einzelne Rechts- bzw. Linkswindungen.

Vorteilhaft ist die Lichtleitfaser mit wechselndem Windungssinn um eine gerade Anzahl, vorzugsweise zwei, nebeneinander liegender Trägerelemente gewendelt. Dabei kann einer oder mehreren Linkswindungen um eines der Trägerelemente die entsprechende Anzahl von Rechtswindungen um ein anderes Trägerelement folgen.

Eine andere Weiterbildung der Verbindungsstrecke ist dadurch gekennzeichnet, daß sie wenigstens zwei zur Hin- und Rückleitung des Lichts geeignete, schraubenförmig gewendelte Lichtleitfasern (1, 3, 6) mit unterschiedlichem Windungssinn aufweist, welche zur Hin- und Rückleitung des Lichtes dienen.

Diese Weiterbildung der Verbindungsstrecke sieht vor, daß sie zur Hin- und Rückleitung des Lichtes wenigstens zwei schraubenförmig gewendelte Lichtleitfasern mit unterschiedlichem Windungssinn aufweist. Dabei können vorteilhaft beide Lichtleitfasern um dasselbe Trägerelement gewunden sein, wobei und die äußere der beiden Windungen einen etwas großeren Windungsabstand aufweist, so daß Hin- und Rückleitung etwa gleiche betragsmäßige Torsion mit unterschiedlichem Vorzeichen haben.

Damit erlaubt die erfindungsgemäße Verbindungsstrecke Nachrichtenübertragung in bewegten Fasern mit weitgehend reduzierter Polarisationsvariation am Ausgang.

Um die Effekte der biegungs- und spannungsinduzierten Doppelbrechung des Fasermaterials auf den Polarisationszustand des Übertragungssignals zu vermindern, ist der Windungsradius der Lichtleitfaser nicht zu klein zu wählen. Er beträgt vorzugsweise wenigstens 2 cm, besonders bevorzugt wenigstens 3 cm.

In einer vorteilhaften Weiterbildung der Erfindung ist die Lichtleitfaser mit einem, elastischen Trägermaterial verbunden ist, welches bei mechanischer Belastung eine Formveränderung der Verbindungsleitung ermöglicht und bei Nichtbelastung die Lichtleitfaser in ihrer gebogenen Ausgangsform hält.

Mit dieser Verbindungsstrecke läßt sich eine kompakte, aber bewegliche und längenveränderliche Verbindung zum optischen Datentransfer zwischen einem Sender und einem Empfänger herstellen. Dadurch wird eine mechanische Behinderung der Gesamtvorrichtung, welche Sender, Empfänger und Verbindungsstrecke umfaßt, vermindert. Des weiteren ist das Ausgangssignal weitgehend unempfindlich gegenüber Formänderungen der Verbindungsstrecke.

Vorzugsweise ist die Lichtleitfaser schraubenförmig gewandelt, z.B, nach Art eines Telefonkabels. Bei Belastung in Längsrichtung der Schraube bzw. des Mäanders kann die Verbindungsstrecke zieharmonikaartig auseinandergezogen werden und nimmt bei Wegfall der Belastung wieder ihre kompakte Ausgangsform ein.

In einer vorteilhaften Weiterbildung ist die Lichtleitfaser um wenigstens ein längliches Trägerelement gewunden, z.B. einen Zylinder. Vorzugsweise ist das Trägerelement flexibel. Das Trägerelement ist beispielsweise ein flexibler Stab.

Zur Realisierung und Stabilisierung ihrer gebogenen Form ist die Faser vorzugsweise am Trägerelement so befestigt, daß sie in ihrer gewundenen Form beweglich ist, aber auf dem Trägerelement stabilisiert bleibt, z.B. indem sie in das Trägerelement eingelassen oder zwischen Trägerelenient und einem Hüllmaterial eingebettet ist.

Kurzbeschreibung der Zeichnung, in der zeigen:

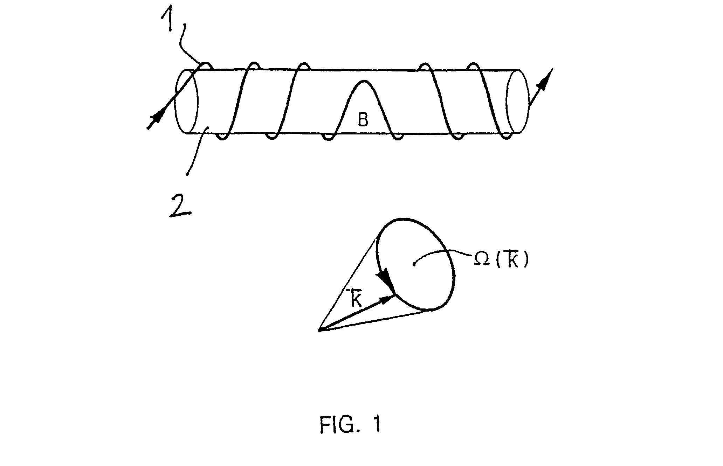

Figuren 1 bis 3    Beipiele für erfindungsgemäße Verbindungsleitungen zur Reduktion des Formeinflusses auf die Polarisation des Ausgangssignal.

Die Figuren 1 bis 3 zeigen Beipiele für erfindungsgemäße Verbindungsleitungen, welche kompakt, beweglich und flexibel sind. Des weiteren sind sie derart gestaltet, daß der Einfluß der Form der Verbindungsleitung auf die Polarisation des Ausgangssignals reduziert ist. Sie sind also besonders geeignet, relativ zueinander ortsveränderliche optische Sender und Empfänger zum Zwecke der Datenkommunikation miteinander zu verbinden.

Im oberen Teil der Figur 1 ist ein Ausschnitt aus einer solchen Verbindungsstrecke dargestellt, welche aus einem Zylinder 2 als Trägermaterial bzw. Trägerelement und einer Lichtleitfaser 1 besteht. Die Lichtleitfaser 1 ist schraubenförmig um den Zylinder 2 gewickelt, wobei der Sinn der Wendelung etwa in der Zylindermitte am Punkt B wechselt. Damit ist die Torsion der Lichtleitfaser im linken Teil der Verbindungsstrecke negativ, im rechten positiv, so daß die gemittelte Torsion etwa Null ist.

Um den Sinn der Wendelung auf einem Zylinder zu wechseln, muß ein Bogen B gewickelt werden. Dieser Bogen wird beispielsweise zusammen mit der übrigen Rechts-Links-Wicklung durch Klebstoff oder Schürung auf dem Zylinder befestigt, da er sich sonst löst.

Zur Herstellung einer längeren Verbindungsstrecke können sich mehrere derartige Leitungsstücke gemäß Fig. 1 aneinander anschließen. Das dargestellte Faserstück ist dann ein Unterabschnitt, in dem die gemittelte Torsion etwa Null ist.

Im unteren Teil der Figur 1 ist schematisch der k-Vektor des in die Faser eingekoppelten Lichts und der dazugehörige Raumwinkel $\Omega$ dargestellt. Bezeichnet r(s) die von der Faser beschriebene Raumkurve als Funktion der Bogenlänge s, so ergibt sich der Raumwinkel $\Omega$ als Maß für die Berry-Phase aus der Torsion $\tau$ der Raumkurve wie folgt ($s_1$, $s_2$ bezeichnen den Anfang bzw. das Ende der Faser):

$$\int_{s_1}^{s_2} \tau(s)\, ds = \Omega \propto \Phi_{Berry} \quad , \text{ wobei } k(s_1) = k(s_2)$$

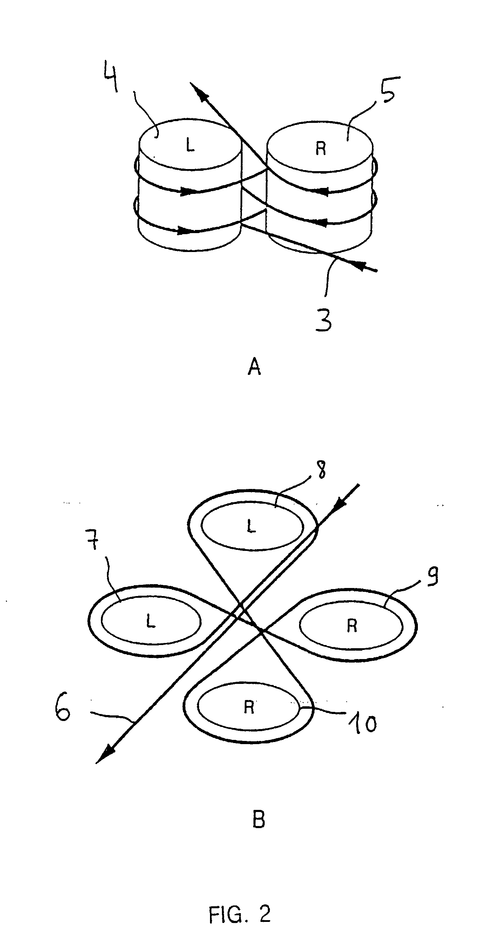

In Figur 2 sind zwei weitere Beispiele für erfindunggemäße Verbindungsstrecken bzw. Ausschnitte daraus gezeigt In Figur 2A ist die Lichtleitfaser 3 doppeli. über zwei Zylinder 4, 5 gewickelt. Um den Zylinder 4 beschreibt die Faser 3 eine Linkswindung (L), um den Zylinder 5 eine Rechtswindung (R). Durch das Abwechseln beider Zylinder wechselt stets eine Rechtsschraubenwindung und eine Linksschraubenwindung ab.

Die Glasfaser 3 ist dabei wie eine Telephonzuleitung in ein Material eingebettet, das formbeständig aber hochelastisch ist, so daß die Zuleitung ziehharmonikaartig auseinandergezogen werden kann und sich wieder zusammenzieht, wenn die Spannungskraft nachläßt. Des weiteren können die Zylinder 4, 5 selbst elastisch sein, um eine laterale Bewegung der Verbindungsstrecke zu ermöglichen.

Die Rückleitung des optischen Signals kann durch die gleiche Glasfaser erfolgen, aber z. B. auf einem anderen spektralen Kanal. Da die geometrische Phase achromatisch ist und eine Rechtsschraube (Linksschraube) eine Rechtsschraube (Linksschraube) bleibt, wenn sie in umgekehrter Richtung durchlaufen wird, tritt für die optische Hin- und Rückleitung derselbe Kompensationseffekt für die formabhängigen Polarisationsschwankungen auf.

An Stelle von zwei Zylinderwicklungen wie in Fig. 2A, kann die Faser auch über mehr Zylinder, z. B. vier Zylinder 7, 8, 9, 10 geführt werden. Dies ist in Fig. 2B gezeigt. In dem Fall 2B wechseln sich ebenfalls Rechts- und Linksschleifen ab, jeweils gekennzeichnet durch R bzw. L.

Es ist grundsätzlich auch möglich, mehrere Linksschleifen auf mehrere Rechtsschleifen folgen zu lassen, indem die Faser mehrfach um einen Zylinder gewickelt wird, ehe sie auf den nächsten Zylinder mit entgegengesetztem Windungssinn geführt wird. Wichtig ist, daß die Formel $\Sigma\, d\Omega_i = 0$ erfüllt bleibt und die Torsion der gesamten Lichtleitfaser ausgeglichen ist.

Die Achromasie der geometrischen Phase erlaubt es, sowohl Weißlichtquellen als auch mehr oder weniger monochromatische Lichtquellen zu verwenden.

Für den Fall einer Hin- und Rückführung des Lichtes durch die gleiche Verbindungsstrecke besteht die Möglichkeit, zwei Zylinderwicklungen nebeneinander anzubringen, von denen die eine, eine Rechtsschraube, als Zuleitung dient und die andere, eine Linksschraube, als Rückleitung. Die elastischen Umhüllungen, die die Formelastizität der Leitung bestimmen, können voneinander getrennt sein, es ist jedoch vorteilhaft, sie zusammenhängend zu gestalten, so daß sie sich nicht voneinander trennen können und die Bewegung der Leitung gemeinsam gleichartig mitmachen.

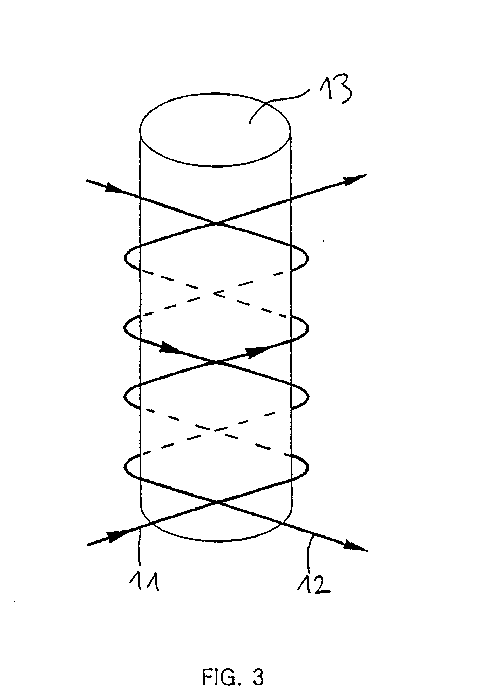

In diesem Fall einer einzigen Rechtsschraube als Hin(Rück)-Leitung und einer einzigen Linksschraube als Rück(Hin)-Leitung können die beiden elastischen Wendelungen 11, 12 auch auf einen einzigen Zylinder 13 übereinander gewickelt werden, wie in Figur 3 dargestellt. Da die äußere Wicklung einen etwas größeren Durchmesser hat, muß ihre Steigung etwas größer als die der inneren Wicklung gewählt werden, um die Bedingung $\Sigma\, d\Omega_i = 0$ zu erfüllen.

Die hier beschriebenen Zu- und Ableitungen werden beispielsweise zwischen einer ortsfesten Basisstation, z. B. dem Meß- oder Steuergerät und dem beweglichen Sensor, z. B. einem Telephonhörer oder einem anderen Sensor frei gespannt oder durch Rohre oder Drähte mit Zug- und Spannrollen gestützt. Dadurch wird die Abhängigkeit der Polarisation des übertragenden Lichtes von der Bewegung der Leitung reduziert. Eine Anwendung von abwechselnd gewendelten Leitungen der beschriebenen Art ist auch zur beweglichen Verbindung von verschiedenen Kabelstrecken in den Knotenpunkten der Telekommunikation mit Hilfe von kurzen, mit Steckern ausgerüsteten Glasfaserleitungen günstig. Diese frei beweglichen Verbindungen führen dann eine wesentlich geringere zeitliche Polarisationsänderung in den Nachrichtenfluß der Übertragungsstrecke ein, als die gewöhnlichen Schleifenverbindungen. Außerdem reduzieren sie den "Kabelsalat".

Gewerbliche Anwendbarkeit:

Die Erfindung läßt sich in allen Bereichen, in denen optische Signale über Lichtleitfaserstrecken übertragen werden, gewerblich anwenden. Vorteilhaft iat sie einsetzbar bei Anordnungen mit relativ zueinander positionsveränderlichem Sendern bzw. Empfänger eines optischen Signals, bei denen die Qualität des Übertragungssignals häufig durch Formänderungen der Übertragungsstrecke beeinträchtigt wird.

Liste der Bezugzeichen:

| | |
|---|---|
| 1, 3, 6 | Lichtleitfasern |
| 2, 4, 5, 7, 8, 9, 10, 13 | Zylinder |
| 11, 12 | Wendelungen |

**Patentansprüche**

**1.** Optische Verbindungsstrecke mit wenigstens einer mehrfach gebogenen Lichtleitfaser, insbesondere zur Nachrichtenübertragung, **dadurch gekennzeichnet,**
**daß** die Lichtleitfaser (1, 3, 6) schraubenförmig abwechselnd als Rechts- und Linksschraube gewunden ist, wobei Faserstücke mit Rechts- und Linkskrümmung derart über die Verbindungsstrecke verteilt angeordnet sind, daß die über die Verbindungsstrecke gemittelte Torsion der Faser (1, 3, 6) etwa Null ist.

2. Optische Verbindungsstrecke nach Anspruch 1,
**dadurch gekennzeichnet, daß** die Lichtleitfaser (1, 3, 6) derart gebogen ist, daß die über Unterabschnitte der Verbindungsstrecke gemittelte Torsion des Unterabschnitts etwa Null ist.

3. Optische Verbindungsstrecke nach Anspruch 1,
**dadurch gekennzeichnet, daß** eine oder mehrere Rechtswindungen auf eine oder mehrere Linkswindungen folgen und sich abwechseln, wobei die Länge des Faserstücks mit Rechtsschraubenwendelung der Länge des Faserstücks mit Linksschraubenwendelung entspricht.

4. Optische Verbindungsstrecke nach einem der Ansprüche 1 bis 3,
**dadurch gekennzeichnet, daß** die Lichtleitfaser (1, 3, 6) mit einem elastischen Trägermaterial verbunden ist, welches bei mechanischer Belastung eine Formveränderung der Verbindungsleitung ermöglicht und bei Nichtbelastung die Lichtleitfaser (1, 3, 6) in ihrer gebogenen Ausgangsform hält.

5. Optische Verbindungsstrecke nach einem der Ansprüche 1 bis 4,
**dadurch gekennzeichnet, daß** die Lichtleitfaser (1, 3, 6) um wenigstens ein längliches Trägerelement, vorzugsweise einen Zylinder (2, 4, 5, 7, 8, 9, 10, 13). gewunden ist.

6. Optische Verbindungsstrecke nach Anspruch 5,
**dadurch gekennzeichnet, daß** das Trägerelement flexibel ist.

7. Optische Verbindungsstrecke nach einem der Ansprüche 5 oder 6,
**dadurch gekennzeichnet, daß** die Faser am Trägerelement derart befestigt ist, daß sie in ihrer gewundenen Form beweglich, aber auf dem Trägerelement stabilisiert bleibt.

8. Optische Verbindungsstrecke nach Anspruch 7,
**dadurch, gekennzeichnet, daß** die Faser in das Trägerelement eingelassen oder zwischen Trägerelement und einem Hüllmaterial eingebettet ist.

9. Optische Verbindungsstrecke nach einem der Ansprüche 5 bis 8,
**dadurch gekennzeichnet, daß** die Lichtleitfaser (1, 3, 6) mit wechselndem Windungssinn um eine gerade Anzahl, vorzugsweise zwei, nebeneinander liegender Trägerelemente gewendelt ist.

10. Optische Verbindungsstrecke nach einem der Ansprüche 5 bis 9,
**dadurch gekennzeichnet, daß** einer oder mehreren Linkswindungen um eines der Trägerelemente die entsprechende Anzahl von Rechtswindungen um ein anderes Trägerelement folgt.

11. Optische Verbindungsstrecke nach einem der vorangegangenen Ansprüche,
**dadurch gekennzeichnet, daß** sie wenigstens zwei zur Hin- und Rückleitung des Lichts geeignete, schraubenförmig gewendelte Lichtleitfasern (1, 3, 6) mit unterschiedlichem. Windungssinn aufweist, welche zur Hin- und. Rückleitung. des Lichtes dienen.

12. Optische Verbindungsstrecke nach Anspruch 12,
**dadurch gekennzeichnet, daß** beide Lichtleitfasern (1, 3, 6) um. dasselbe Trägerelement gewunden sind, wobei die äußere der beiden Windungen einen etwas größeren Windungsabstand aufweist, so daß Hin- und Rückleitung etwa gleiche Torsion mit unterschiedlichem Vorzeichen haben.

13. Optische Verbindungsstrecke nach einem der vorangegangenen Ansprüche,
**dadurch gekennzeichnet, daß** der Windungsradius der Lichtleitfaser (1, 3, 6) größer als 2 cm, vorzugsweise größer als 3 cm ist.

14. Optische Verbindungsstrecke nach Anspruch 1 **dadurch gekennzeichnet,**
**daß** eine Lichtleifaser als Zuleitung dient und eine Rechtsschraube ist und die andere Lichtleitfaser als Rückleitung dient und eine Linksschraube ist.

15. Optische Verbindungsstrecke nach Anspruch 14, **dadurch gekennzeichnet,**
**daß** beide Lichtleifasern auf einen einzigen Zylinder (13) übeeinander gewickelt sind.

**Claims**

1. Optical link with at least one multiply bent light-conducting fibre, in particular for telecommunication, **characterized in that**
the light-conducting fibre (1, 3, 6) is helically wound in alternation in the form of a right-hand and a left-hand helix, fibre pieces of right-hand and left-hand curvature being so distributed over the link that, when averaged over the link, the torsion of the fibre (1, 3, 6) is approximately zero.

2. Optical link according to claim 1,
**characterized in that** the light-conducting fibre (1, 3, 6) is bent such that, when averaged over subsections of the link, the torsion of the subsection is approximately zero.

3. Optical link according to claim 1,
**characterized in that** one or more right-hand tums follow one or more left-hand turns and alternate with each other, the length of the fibre piece with right-hand helix corresponding to the length of the fibre piece with left-hand helix.

4. Optical link according to any one of claims 1 to 3,
**characterized in that** the light-conducting fibre (1, 3, 6) is joined to an elastic substrate material, said elastic substrate material when mechanically loaded permitting a deformation of the link and when not loaded keeping the light-conducting fibre (1, 3, 6) in its bent original form.

5. Optical link according to any one of claims 1 to 4,
**characterized in that** the light-conducting fibre (1, 3, 6) is wound around at least one oblong carrier element, preferably a cylinder (2, 4, 5, 7, 8, 9, 10, 13).

6. Optical link according to claim 5,
**characterized in that** the carrier element is flexible.

7. Optical link according to any one of claims 5 or 6,
**characterized in that** the fibre is attached to the carrier element in such a manner that it remains movable in its wound form, but remains stabilized on the carrier element.

8. Optical link according to claim 7,
**characterized in that** the fibre is let into the carrier element or is embedded between carrier element and a jacket material.

9. Optical link according to any one of claims 5 to 8,
**characterized in that** the light-conducting fibre (1, 3, 6) is wound in alternating directions around an even number, preferably two, juxtaposed carrier elements.

10. Optical link according to any one of claims 5 to 9,
**characterized in that** one or more left-hand turns around one of the carrier elements are followed by the corresponding number of right-hand turns around another carrier element.

11. Optical link according to any one of the preceding claims,
**characterized in that** said optical link comprises at least two helically wound light-conducting fibres (1, 3, 6) suitable for the outward and return conducting of the light, said light-conducting fibres (1, 3, 6) having different directions of turn and serving for the outward and return conducting of the light.

12. Optical link according to claim 12,
**characterized in that** both light-conducting fibres (1, 3, 6) are wound around the same carrier element, the outer of the two turns having a slightly larger intertum interval, so that outward and return conducting have approximately identical torsion with different signs.

13. Optical link according to any one of the preceding claims,
**characterized in that** the turn radius of the light-conducting fibre (1, 3, 6) is greater than 2 cm, preferably greater than 3 cm.

14. Optical link according to claim 1,
**characterized in that** one light-conducting fibre serves as the outward line and is a right-hand helix and the other light-conducting fibre serves as the return line and is a left-hand helix.

15. Optical link according to claim 14, **characterized in that**
both light-conducting fibres are wound over each other on one single cylinder (13).

**Revendications**

1. Segment de liaison optique comportant au moins une fibre optique coudée plusieurs fois, destiné en particulier à la transmission d'informations, **caractérisé en ce que**,
les fibres optiques (1, 3, 6) sont spiralées en forme d'hélice, alternativement en hélice à droite et à gauche, les tronçons de fibre courbés à droite et à gauche étant répartis sur le segment de liaison de telle façon que la torsion des fibres (1, 3, 6), en moyenne calculée sur le segment de liaison, est approximativement égale à zéro.

2. Segment de liaison optique selon revendication 1,
**caractérisé en ce que** les fibres optiques (1, 3, 6) sont recourbées de telle façon que la torsion des sous-sections, en moyenne calculée sur les sous-sections du segment de liaison, est approximativement égale à zéro.

3. Segment de liaison optique selon revendication 1,
**caractérisé en ce qu'**une ou plusieurs spires à droite sont consécutives à une ou plusieurs spires à gauche et alternent, la longueur du tronçon de fibre avec hélice à droite correspondant à la longueur du tronçon de fibre avec hélice à gauche.

4. Segment de liaison optique selon l'une quelconque des revendications 1 à 3,
**caractérisé en ce que** la fibre optique (1, 3, 6) est reliée à une matière support élastique qui permet une modification de la forme de la ligne de raccordement en cas de sollicitation mécanique et, en l'absence de sollicitation, maintient les fibres optiques (1, 3, 6) dans leur forme courbe de départ.

5. Segment de liaison optique selon l'une quelconque des revendications 1 à 4,
**caractérisé en ce que** la fibre optique (1, 3, 6) est enroulée au moins autour d'un élément support allongé, de préférence un cylindre (2, 4, 5, 7, 8, 9, 10, 13).

6. Segment de liaison optique selon revendication 5,
**caractérisé en ce que** l'élément support est flexible.

7. Segment de liaison optique selon l'une quelconque des revendications 5 ou 6,
**caractérisé en ce que** la fibre est fixée sur l'élément support de façon à être mobile dans sa forme hélicoïdale mais reste stabilisée sur l'élément support.

8. Segment de liaison optique selon revendication 7,
**caractérisé en ce que** la fibre est enchâssée dans l'élément support ou logée entre l'élément support et une matière gainante.

9. Segment de liaison optique selon l'une quelconque des revendications 5 à 8,
**caractérisé en ce que** la fibre optique (1, 3, 6) tourne en hélice autour d'un nombre pair d'éléments supports, de préférence deux, placés l'un à côté de l'autre, avec un sens d'enroulement alternant.

10. Segment de liaison optique selon l'une quelconque des revendications 5 à 9,
**caractérisé en ce qu'**une ou plusieurs spires à gauche autour de l'un des éléments supports sont suivies par un nombre correspondant de spires à droite autour d'un autre élément support.

11. Segment de liaison optique selon l'une quelconque des revendications précédentes,
**caractérisé en ce qu'**elle présente au moins deux fibres optiques (1, 3, 6) spiralées en forme d'hélice et adaptées à la conduite et au retour de la lumière, comportant un sens d'enroulement différent et servant à la conduite et au retour de la lumière.

12. Segment de liaison optique selon revendication 12,
**caractérisé en ce que** les deux fibres optiques (1, 3, 6) sont enroulées autour du même élément support, les deux spires extérieures présentant un écartement légèrement plus important des spires de sorte que la conduite et le retour ont approximativement la même torsion avec un signe de polarité différent.

13. Segment de liaison optique selon l'une quelconque des revendications précédentes,
**caractérisé en ce que** le rayon d'enroulement de la fibre optique (1, 3, 6) est supérieur à 2 cm, de préférence à 3 cm.

14. Segment de liaison optique selon revendication 1,
**caractérisé en ce qu'**une fibre optique sert de conduite et est une hélice à droite et l'autre fibre optique sert de retour et est une hélice à gauche.

15. Segment de liaison optique selon revendication 14, **caractérisé en ce que**
les deux fibres optiques sont enroulées l'une au-dessus de l'autre sur un seul cylindre (13).

FIG. 1

FIG. 2

FIG. 3